# EUROPEAN PATENT SPECIFICATION

(11) **EP 4 528 037 B1**
(45) Date of publication and mention of the grant of the patent: **09.12.2026**
(21) Application number: 23198622.5
(22) Date of filing: 20.09.2023
(51) Int. Cl.: E02F 9/22

(54) **WORK IMPLEMENT WITH GRIPPER COMPONENTS AND HYDRAULIC ARANGEMENT**
ARBEITSGERÄT MIT GREIFERKOMPONENTEN UND HYDRAULISCHER ANORDNUNG
OUTIL DE TRAVAIL AVEC COMPOSANTS DE PRÉHENSION ET AGENCEMENT HYDRAULIQUE

(43) Date of publication of application: 26.03.2025
(73) Proprietor: Oilquick AB, 824 12 Hudiksvall (SE)
(72) Inventor: Sjölin, Kristian, 826 31 Söderhamn (SE)
(74) Representative: Groth & Co. KB

(56) References cited:
- EP-A2- 0 995 557
- CN-U- 214 527 674

## Description

### Technical Field

The invention relates to the field of grippers or claw systems used on construction or forestry machines and/or in combination with quick couplers, tool holders or tilt rotators coupled to such machines and in particular to a hydraulic system related to such a gripper or claw system.

### Background of the Invention

Typically, when using gripper systems for machines, no matter whether these gripper systems are used for grabbing gravel via a shovel, for gripping logs (logging) or gripping of various elements during construction, two hydraulic cylinders are involved to close and open the grippers. In the prior art, these two hydraulic cylinders are controlled and coupled in a parallel manner with different solutions for synchronization of the cylinders as it is a required that the pair of grippers move in synchronization. Typically, such hydraulic cylinders that are coupled in parallel have the same size.

One issue with gripper systems according to the prior that typically occur are synchronization issues due to uneven resistance or loads on one of the pair of grippers or claws.

In the field of field grippers, claw systems, forestry machines, or clamshell grabbers the unsynchronized movement of the two gripper components are especially troublesome due to precision required to grab material or objects.

In efforts to address synchronization issues in hydraulic actuators, different solutions have been adopted, however not related to gripper systems.

The US 5682955 A discloses a blade control system including a directional control valve, a fluid regeneration valve and a selector valve for selectively controlling fluid flow between a pump and first and second hydraulic cylinders and between the cylinders. With the valves positioned at preselected operative positions, pressurized fluid from the pump is directed to the head end chamber of the first cylinder, fluid expelled from the rod end chamber of the first cylinder is diverted to the head end chamber of the second cylinder, and fluid expelled from the rod end chamber of the second cylinder is combined with the fluid being directed to the head end chamber of the first cylinders to provide two stages of fluid regeneration for increasing the extension speed of the cylinder.

The US 5682955 A does however not discuss synchronization issues related to gripper system, claw systems, work implements or the like.

Another example is provided in US 5110251 A, which discloses a hydraulic platform lift for use on trucks and truck trailers has two hydraulic cylinders, one on each side of a door. The cylinders are phasing cylinders in that one cylinder is larger than the other cylinder by a specific ratio. The cross-sectional area of the fluid in the rod end of the larger cylinder minus the area of the rod is equal to the cross-sectional area of the smaller cylinder. A connecting line interconnects the rod end of the large cylinder with the cap end of the small cylinder. Hydraulic fluid can be directed by a controller into the cap end of the large cylinder or the rod end of the small cylinder. For upward movement, hydraulic fluid is forced into the rod end of the small cylinder. This in turn forces hydraulic fluid through the connecting line into the rod end of the large cylinder, thereby raising both pistons. For downward movement, hydraulic fluid is forced into the cap end of the large cylinder, thereby forcing fluid out of the rod end of the large cylinder and into the cap end of the small cylinder. This causes both cylinders to move downward. The platform lift also has a self-levelling feature whereby the pistons can be made level with one another by moving the platform into an uppermost position. The operational mechanism is located entirely at the sides of the trailer. The lift platform can be made to exert a positive upward force or a positive downward force during use.

The US 5110251 A does however neither discuss any synchronization issue related to gripper systems or work implements.

An example of an adaptive load-clamping system is shown in EP 0995557 A2, which discusses adaptive load-clamping system for handling load, wherein two opposite clamp arms are driven by two identical hydraulic cylinders arranged in parallel within a hydraulic circuit and a variable relief valve assembly arranged in parallel with the two actuators. The system allows to adjust clamping force based on the load's weight, under certain conditions, preventing both damage to lighter loads and slippage of heavier ones.

### Summary of the Invention

The present invention aims to improve efficiency in supplying hydraulic fluid to a work implement comprising two hydraulic actuators arranged in a master/slave series flow relationship. More specifically, an object of the present invention is to permit synchronized movement between a master and slave actuator controlling gripping components in a work implement of a machine.

A further object of the present invention is to provide a hydraulic arrangement which can synchronize a master and slave actuator in either an extended or retracted position, or both.

These and other objects are fulfilled by the present invention as defined by the independent claims. Preferred embodiments are defined by the dependent claims.

The inventor(s) of the present invention has discovered that it is possible to improve synchronization in gripper systems or work implements by coupling a first actuator, for example a hydraulic cylinder, and a second actuator, for example a hydraulic cylinder, in series and by compensating the volume in the first actuator and the second actuator, respectively, for optimal performance. In particular did the inventor discover that it is possible to couple two actuators in series and in a master-slave relationship.

The present inventions takes a new and different approach to synchronizing master and slave actuators controlling gripping components. Instead of using complex parts such as sensors, switching valves or multiway valves, pressure relief valves are arranged in a novel and inventive hydraulic arrangement for controlling first and second gripping components.

According to one aspect of the present invention, there is provided a work implement for a machine designed to grip material or an object. The work implement comprises a frame, a first gripper component and a second gripper component. The work implement further comprises a master actuator having a first master port on a piston side and a second master port on a rod side, as well as a slave actuator having a first slave port on a piston side and a second slave port on a rod side. The first gripper component and second gripper component are coupled to the frame in a pivotable manner. The master actuator is coupled to the frame and the first gripper component for pivoting the first gripper component from an open position to a closed position and back. While the slave actuator is coupled to the frame and the second gripper component for pivoting the second gripper component from an open position to a closed position and back.

The master actuator may be dimensioned to absorb the entire pressure or load of the hydraulic system.

A cross section or size of a piston of the master actuator may be greater than the cross section or size of a piston of the slave actuator, if hydraulic cylinders or hydraulic actuators are used.

The work implement further comprises a hydraulic arrangement, which comprises a first side, a second side, a first pressure relief valve having a first relief pressure and a second pressure relief valve having a second relief pressure, wherein the first pressure relief valve and the second pressure relief valve are arranged to open up in a same direction either from the first side to the second side or from the second side to the first side. The hydraulic arrangement also comprises hydraulic conduits for interconnecting the various components in the system.

The hydraulic conduits in the hydraulic arrangement are arranged so that:
- the master actuator and the first pressure relief valve are coupled in parallel;
- the slave actuator and the second pressure relief valve are coupled in parallel; and
- the master actuator and the first pressure relief valve are coupled in series with the slave actuator and the second pressure relief valve.

In an embodiment of the present invention the first pressure relief valve and the second pressure relief valve are arranged to open in a direction from the first side to the second side upon reaching the first pressure or the second pressure so that the first gripper component or the second gripper component can be moved into synchronization in a closed position.

Since the work implement is typically in the closed position when it is not in use, so as not to interfere with other tools or implements that may be coupled to the machine for instance via a quick coupling unit, the synchronization in the closed position may be very convenient and occur naturally when the work implement is stowed away.

In another embodiment the first pressure relief valve and the second pressure relief valve are arranged to open in a direction from the second side to the first side upon reaching the second pressure or the first pressure so that the first gripper component or the second gripper component can be moved into synchronization in an open position.

There may be situations where a synchronization in the open position of the fist and second gripper components is advantageous. For instance, when a gripper shovel or the like is grabbing and unloading rather big stones and synchronization issues might occur during gripping of the material (e.g. stones) and when the two grippers of the shovel need to be synchronized in the open position during release of the material.

According to one embodiment the first side is connectable to a hydraulic fluid tank or a hydraulic fluid pump. While the second side is connectable to the hydraulic fluid pump if the first side is connected to the hydraulic fluid tank or to the hydraulic fluid tank if the first side is connected to the hydraulic fluid pump.

This may be solved using a switching valve in the hydraulic arrangement or hydraulic system.

The functionality of making the first side and second side being connectable to a hydraulic fluid tank or a pump makes the system more versatile and enables the further functions explained herein.

The first side and/or the second side may be a port or connector or an exit valve or the like.

In one embodiment the master actuator and the first pressure relief valve are coupled in series with the first side and the slave actuator and the second pressure relief valve are coupled in series with the second side.

In embodiment of the present invention the master actuator and the slave actuator are in an extended state in the closed position, and if the slave actuator is out of synchronization with the master actuator in the closed position, a hydraulic fluid flows from the first side, which is in this case the pump side, via the first pressure relief valve, which is in this case upon since no more hydraulic fluid can be pumped into the master actuator via the first master port as the master actuator is extended, to the first slave port for extending the slave actuator and then from the second slave port to the second side, which is connected to the hydraulic fluid tank.

The above explains the flow of the hydraulic fluid for optimal performance and functioning of the synchronization in the closed position.

According to another embodiment the master actuator and the slave actuator are in an extended state in the closed position, and if the master actuator is out of synchronization with the slave cylinder in the closed position, a hydraulic fluid flows from the first side via the first master port into the master actuator and from the second master port to the second pressure relief valve, which is in this case open since no more hydraulic fluid can be pumped into the slave actuator via the first slave port as the slave actuator is extended, and from the second pressure relief valve to the second side, which is connected to the hydraulic fluid tank.

The above explains the flow of the hydraulic fluid for optimal performance and functioning of the synchronization in the open position.

In an embodiment the first relief pressure is smaller than the second relief pressure.

This configuration ensures that the hydraulic fluid is taking the correct flow path and also takes the different sizing of the master actuator and slave actuator into account.

According to further embodiments of the present invention the hydraulic system further comprising a third pressure relief valve having a third relief pressure, and a fourth pressure relief valve having a fourth relief pressure, the third pressure relief valve being coupled in parallel with the master actuator and the first pressure relief valve and the fourth pressure relief valve being coupled in parallel with the slave actuator and the second pressure relief valve and wherein the third pressure relief valve and the fourth pressure relief valve are designed to open in a direction from the second side to the first side and wherein the first pressure relief valve and the second pressure relief valve are designed to open in a direction from the first side to the second side.

Using a third and a fourth pressure relief valve in the hydraulic arrangement or hydraulic system may enable a synchronization in the closed position and the open position and make the work implement therewith more versatile.

According to embodiment the master actuator, the first pressure relief valve and the third pressure relief valve are coupled in series with the first side. Wherein the slave actuator, the second pressure relief valve and the fourth pressure relief valve are coupled in series with the second side.

The coupling according to the above helps to direct flow of hydraulic fluid in the correct manner and it also helps to achieve correct functioning while keeping the master actuator and the slave actuator coupled in series.

In yet other embodiments, also according to the below method of the invention, the master actuator and the slave actuator are in an retracted state in the open position, and if the master actuator is out of synchronization with the slave actuator in the open position, a hydraulic fluid flow is directed from the second side, which is in this case the pump side, via the fourth pressure relief valve, which is in this case upon since no more hydraulic fluid can be pumped into the slave actuator via the second slave port as the slave actuator is retracted, to the second master port for retracting the master actuator and then from the first master port to the first side, which is connected to the hydraulic fluid tank.

According to another embodiment, also according to the below method of the invention, the master actuator and the slave actuator are in a retracted state in the open position. If the slave actuator is out of synchronization with the master actuator in the open position, a hydraulic fluid flow is directed from the second side, which is in this case the pump side, to the second slave port for retracting the slave actuator and then from the first slave port via the third pressure relief valve, which is in this case open since no more hydraulic fluid can be pumped into the master actuator via the second master port as the master actuator is retracted, to the first side, which is connected to the hydraulic fluid tank.

The above two paragraphs explain the flow of the hydraulic fluid for optimal performance and functioning of the synchronization in the closed position and open position.

In embodiments the third relief pressure is smaller than the first relief pressure. Furthermore, the third relief pressure may be smaller than the second relief pressure.

The specification of the third and fourth relief pressure may be chosen for optimal performance and also to ensure proper functioning.

The first, second, third and/or fourth relief pressure may however be chosen differently, in case the hydraulic system or hydraulic arrangement requires such an amendment.

According to one embodiment the first gripper component is a first gripper arm and the second gripper component is a second gripper arm.

Using a first gripper arm and a second gripper arm may ensure that objects can be gripped properly.

One of the first gripper arm or the second gripper arm may comprise a pair of gripper fingers, which pair of gripper fingers is designed to receive the other of the gripper arms in between the gripper fingers during opening and closing of the first gripper arm and the second gripper arm. The gripper fingers may ensure a symmetric gripping of objects, thus the load may be applied symmetric to a log or lamp pole or the like.

In an embodiment the work implement according to above may be employed with a quick coupling unit or a tilt rotator.

As the skilled person realizes, the components and hydraulic arrangements according to the present invention, as well as preferred embodiments thereof, are suitable for use in a wide variety of work implements. Such work implements may be shovels, grippers, claws are breakers, such as concrete element breakers used for demolition.

In another aspect of the present invention a method for synchronizing two or more actuators used in a work implement of a machine is proposed.
- The machine may be any machine such as an earthmoving machine, a truck lift, a loading crane, a demolition machine or other machine comprising work implements having two or more actuators that may be exposed to uneven loads, such as earthmoving blades or forks of a truck lift.
- The work implement may comprise a master actuator, a slave actuator, a first side, a second side as well as a hydraulic arrangement.
- The master actuator may have a first master port on a piston side and a second master port on a rod side and wherein the slave actuator may have a first slave port on a piston side and a second slave port on a rod side.
- The first and second side may both be connectable to either a hydraulic pump or a hydraulic tank and this may be achieved with a switch valve or a bidirectional valve.
- The hydraulic arrangement may comprise at least a first pressure relief valve and a second pressure relief valve. The first and second pressure relief valves are preferably unidirectional and arranged to enable hydraulic fluid to move either from a first side to a second side, or from a second side to a first side.
- The hydraulic arrangement may comprise hydraulic conduits which are arranged so that: the master actuator and the first pressure relief valve are coupled in parallel; the slave actuator and the second pressure relief valve are coupled in parallel; the master actuator and the first pressure relief are coupled in series with the slave actuator and the second pressure relief valve.

The term unidirectional herein means that the corresponding valve, first- , second-, third-, or fourth pressure relief valves, each may be a valve that will only allow flow in one direction. Such valves may come in a variety of styles, shapes, and designs, but the general idea is the same. Alternatively, such valves may be called check valves, non-return valves and so on.

The proposed method may comprise the following steps for guiding a hydraulic fluid:
- Connecting the first or second side to a hydraulic pump, causing the first and second group of actuators to extend; and

If the slave actuator is out of synchronization with the master actuator in the closed position, thus the master actuator is fully extended, the hydraulic fluid flows:
i. from the first side, which is in this case the pump side;
ii. to the first pressure relief valve, which is in this case open since no more hydraulic fluid can be pumped into the master actuator via the first master port as the master actuator is preferably fully extended;
iii. to the first slave port for extending the slave actuator;
iv. and then from the second slave port to the second side, which is connected to the hydraulic fluid tank.

If the master actuator is out of synchronization with the slave actuator, thus the slave actuator may be in the fully extended position, in the closed position, the hydraulic fluid flows:
v. from the first side, which is in this case is also the pump side;
vi. to the first master port into the master actuator, causing the master actuator to extend;
vii. from the second master port to the second pressure relief valve, which is in this case open since no more hydraulic fluid can be pumped into the slave actuator via the first slave port as the slave actuator is preferably fully extended; and,
viii. from the second pressure relief valve to the second side, which is connected to the hydraulic fluid tank.

In one embodiment of the above-mentioned method, it is proposed that the work implement comprises at least one additional actuator, and that the hydraulic arrangement comprises at least one additional pressure relief valve. In such an embodiment the additional actuator is coupled in parallel with at least one additional pressure relief valve. The additional pressure relief valve is unidirectional and is arrange in a similar manner as the first and second pressure relief valve. The slave actuator and the additional actuator are coupled in a similar manner as the master actuator and slave actuator. Meaning that the additional actuator and additional pressure relief valve are coupled in series with the slave actuator and second pressure relief valve, and that the hydraulic arrangement comprises conduits connecting the piston side of the slave actuator to the rod end of the additional actuator. As a person skilled in the arts understands it is possible to arrange any number of actuators in this manner to enable for the multiple actuators to synchronize in either a closed position or an open position.

Furthermore, according to one embodiment wherein the work implement comprises at least one additional actuator and pressure relief valve, the hydraulic arrangement might comprise additional pressure relief valves arranged in a similar manner as the third and fourth pressure relief valve as to enable the multiple actuators to synchronize in either an extended position or a retracted position, as explained previously.

The third pressure relief valve and the fourth pressure relief valve may also be unidirectional.

Further, one feature found in the pressure relief valves disclosed herein, is that the opening pressure is dependent on the back pressure (system pressure) at or in the exit port. That is, necessary pressure to open the pressure relief valve = set pressure (for example set on a spring in the corresponding first-, second-, third-, or fourth pressure relief valve) plus current pressure in the system on the output side or exit port of the corresponding pressure relief valve. This is evident from the figures as well. However, it is to be noted that this function or configuration is not absolutely necessary.

Further objects and advantages of the present invention will be discussed below by means of exemplifying embodiments.

### Brief Description of the Drawings

The present invention will now be described, for exemplary purposes, in more detail by way of an embodiment(s) and with reference to the enclosed drawings, in which:
- Fig. 1: shows a work implement in the form of a gripper system in a perspective view;
- Fig. 2: shows the work implement figure 1 in a top down view;
- Fig. 3a: shows the work implement according to figures 1 and 2, whereby the master and slave actuator are in a fully extended state and the gripper components in a closed position;
- Fig. 3b: shows the work implement, whereby the master and slave actuator are in a fully retracted state and the gripper components in an open position;
- Fig. 4a: shows the work implement, whereby the master and slave actuator are in an extended state and whereby the slave actuator is out of synchronization with the master actuator in the closed position;
- Fig. 4b: shows the work implement, whereby the master and slave actuator are in a retracted state and wherein the slave actuator is out of synchronization with the master actuator in the open position;
- Fig. 5a: schematically illustrates a hydraulic arrangement according to an embodiment, whereby the master actuator and the slave actuator are in an extended state in the closed position and whereby the slave actuator is out of synchronization with the master actuator in the closed position;
- Fig. 5b: schematically illustrates the hydraulic arrangement according to figure 5a, whereby the master actuator and the slave actuator are in an extended state in the closed position and whereby the master actuator is out of synchronization with the slave cylinder in the closed position;
- Fig. 6a: schematically illustrates a hydraulic arrangement according to another embodiment, whereby the hydraulic arrangement comprises a third and fourth relief pressure valve and wherein the master actuator and the slave actuator are in an extended state in the closed position and whereby the slave actuator is out of synchronization with the master actuator in the closed position;
- Fig. 6b: schematically illustrates the hydraulic arrangement according to figure 6a, whereby the master actuator and the slave actuator are in an extended state in the closed position and whereby the master actuator is out of synchronization with the slave cylinder in the closed position;
- Fig. 6c: schematically illustrates the hydraulic arrangement of figures 6a and 6b, whereby the master actuator and the slave actuator are in an retracted state in the open position and whereby the master actuator is out of synchronization with the slave actuator in the open position, and
- Fig. 6d: schematically illustrates the hydraulic arrangement of figures 6a to 6c, whereby the master actuator and the slave actuator are in an retracted state in the open position and whereby the slave actuator is out of synchronization with the master actuator in the open position.

### Detailed Description

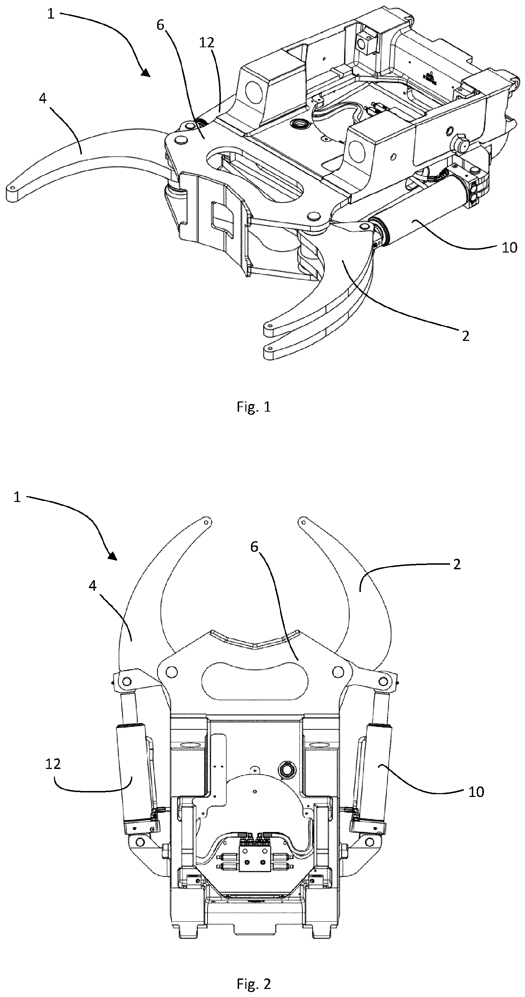

In the following, the present invention will be described with a reference to the figures 1 and 2. Figures 1 and 2 show one proposed embodiment of the present invention, wherein figure 1 shows a embodiment wherein the work implement 1 is employed as a work implement in the form of a gripper system 1. In other embodiments, not shown, the work implement could be clamps, pliers, tongs, clamshell grabber, bucket grapple, log grapple, stone grapple or scrap grapple.

Figure 1 shows a gripper system 1 from a perspective and figure 2 from a top-down view. In the illustrated embodiment the gripper system 1 comprises a frame 6, a first and second gripper component 2, 4, which in the illustrated embodiment is a first gripper arm 2 and a second gripper arm 4. The first gripper arm 2 and the second gripper arm 4 is coupled to the frame 6 in a pivotable manner. The master actuator 10 is coupled to the frame 6 and the first gripper arm 2 for pivoting the first gripper arm 2 from an open position 36 to a closed position 38 and back. The slave actuator 12 is coupled to the frame 6 and the second gripper arm 4 for pivoting the second gripper arm 4 from an open position 36 to a closed position 38 and back.

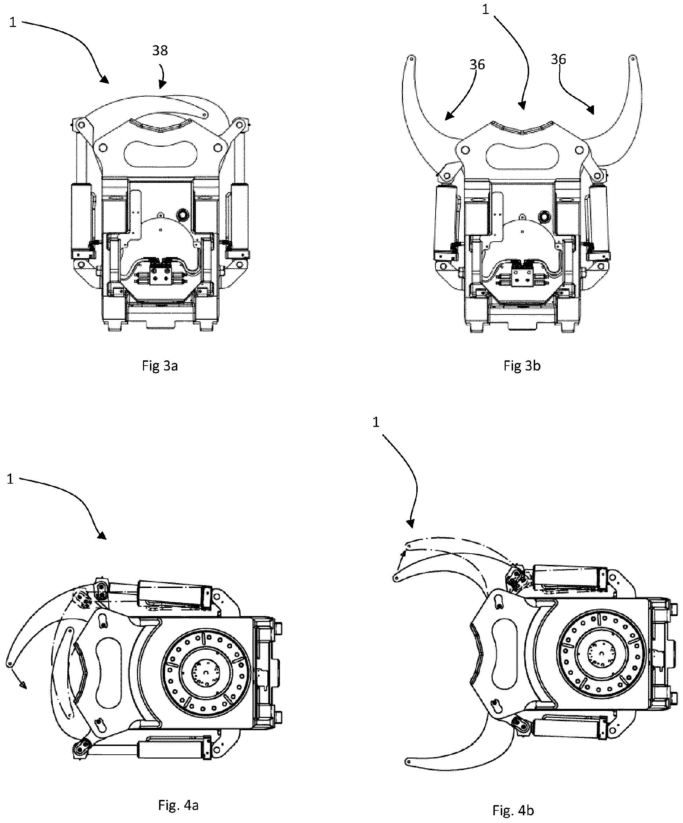

Figure 3a shows a gripper system 1 from a top perspective wherein the master actuator 10 and slave actuator 12 are in a fully extended state and in a closed position 38. Figure 3b shows a gripper system 1 from a top perspective wherein the master and slave actuator 10, 12 are in a fully retracted state and in an open position 36.

Historically, master and slave actuator chambers have been of the same size, resulting in the fluid volume released from the rod end chamber of the master actuator with each piston rod movement is lesser than the volume of pressurized fluid directed to its head end chamber. Consequently, the master actuator extends further and more rapidly than its slave counterpart.

In one preferred embodiment the master actuator 10 is larger than the slave actuator 12 by a fixed ratio, enabling the master and slave actuator 10, 12 to extend in a synchronized manner. The fixed ratio can be expressed as a function of the diameter of the master actuator chamber X, the master actuator piston Y, and the slave actuator chamber Z. The fixed ratio can then be expressed as Z = (X²-Y²)^{0.5} · (1±K), wherein K is a fixed number between 0 to 0.02, preferably 0 to 0.015, or more preferably 0 to 0.01.

Work implements design to grip or grab materials or objects occasionally experience synchronization failure due to other factors. This may include, for example: wear and tear; hydraulic issues; sensor malfunctions; software or control issues; electrical problems, such as faulty wiring; external factors, if for example one gripping component encounters more resistance than the other; calibration issues or lack of regular maintenance; extreme temperature that affect the performance of hydraulic fluids.

When synchronization failures occur the gripping system 1 needs to equalise the pressure in the master actuator 10 and the slave actuator 12. The present invention enables for a gripping system 1 to either: synchronize the two gripping components 2, 4 in a closed position, as shown in figure 4a; or synchronize the two gripping components 2, 4 in a open position, as shown in figure 4b. In one embodiment the proposed invention is capable of synchronize the two gripping components 2, 4 in a both closed position 38 and open position 38 by utilizing additional pressure relief valves.

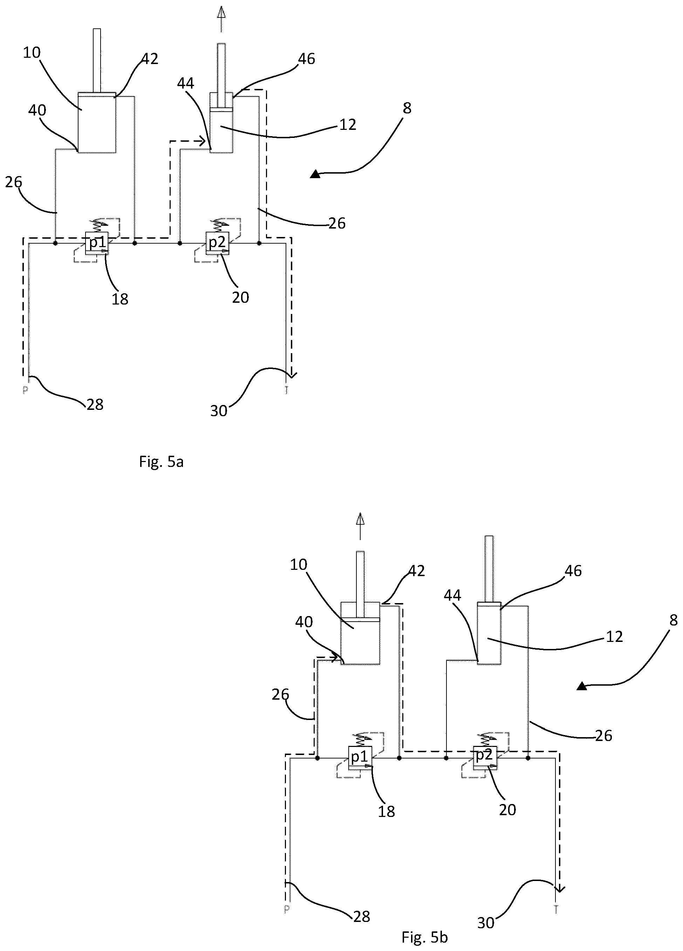

Figure 5a schematically illustrates one proposed embodiment of a hydraulic arrangement in a scenario in which the master actuator 10 and the slave actuator 12 are in an extended state in the closed position 38 and wherein the slave actuator 12 is out of synchronization with the master actuator 10 in the closed position 38. The master actuator 10 which is coupled to the first gripping component 2 has a first master port 40 on a piston side and a second master port 42 on a rod side. The slave actuator 12, which is coupled to the second gripping component 4, has a first slave port 44 on a piston side and a second slave port 46 on a rod side. The hydraulic arrangement 8 comprises a first side 28 and a second side 30, in the illustrated scenario in figure 5a the first side 28 is connected to a hydraulic fluid pump and the second side 30 is connected to a hydraulic fluid tank, consequently the master actuator 10 and slave actuator 12 are moving towards a closed position 38. In a scenario in which the gripper is moving towards an open position 36 the coupling is reversed, meaning that the first side 28 connects to the hydraulic tank and the second side 30 connects to the hydraulic pump. Hydraulic fluid moves through the hydraulic arrangement 8 via hydraulic conduits 26 which interconnects the various components in the system. The hydraulic arrangement 8 further comprises a first pressure relief valve 18 having a first relief pressure (p1) and a second pressure relief valve 20 having a second relief pressure (p2). The relief pressure valves 18, 19 can be any device or mechanism able to automatically open to release excess pressure when pressure exceeds a predetermined set point. In one preferred embodiment the first relief pressure (p1) is smaller than the second relief pressure (p2). The master actuator 10 and the first pressure relief valve 18 are coupled in parallel via the hydraulic arrangement 8. In a similar manner, the slave actuator 12 and the second pressure relief valve 20 are coupled in parallel via the hydraulic arrangement 8. The master actuator 10 and the first pressure relief valve 18 are coupled in series with the slave actuator 12 and the second pressure relief valve 20. In the illustrated embodiment the first pressure relief valve 18 and the second pressure relief valve 20 are arranged to open up in a direction from the first side 28 to the second side 30 upon reaching the first pressure (p1) or the second pressure (p2) so that the first gripper component 2 or the second gripper component 4 can be moved into synchronization in a closed position 38. In another embodiment, which is not shown, the pressure relief valves 18, 19 may be arranged to open up in the opposite direction, i.e from the second side 30 to the first side 30, which would enable the gripper component 2, 4 to be moved into synchronization in an open position 36.

In figure 5a the master actuator 10 and the slave actuator 12 are in an extended state in the closed position 38 and the slave actuator 12 is out of synchronization with the master actuator 10. The dashed line with arrow indicate the conduit in which the hydraulic fluid moves to synchronize the actuators 10, 12. Following the dashed line it can be seen that the hydraulic fluid flows from the first side 28, which is in this case the pump side, via the first pressure relief valve 18, which is in this case open since no more hydraulic fluid can be pumped into the master actuator 10 via the first master port 40 as the master actuator 10 is fully extended. The hydraulic fluid then moves towards the first slave port 44 for extending the slave actuator 12, which is illustrated by an arrow just above the piston on the slave actuator 12. Finally, the hydraulic fluid moves towards the second slave port 46 to the second side 30, which is connected to the hydraulic fluid tank.

Figure 5b shows the same hydraulic arrangement 8 as illustrated in figure 5a but shows instead how the hydraulic fluid moves in a scenario in which the master actuator 10 is out of synchronization with the slave actuator 12. Following the dashed line it can be seen that the hydraulic fluid flows from the first side 28 via the first master port 40 into the master actuator 10 and from the second master port 42 to the second pressure relief valve 20. The second pressure relief valve 20 is in this case open since no more hydraulic fluid can be pumped into the slave actuator 12 via the first slave port 44 as the slave actuator 12 is fully extended. The fluid then moves from the second pressure relief valve 20 to the second side 30, which is connected to the hydraulic fluid tank.

In one preferred embodiment, as shown in figure 5a and 5b, the master actuator 10 and the first pressure relief valve 18 are coupled in series with the first side 28; and the slave actuator 12 and the second pressure relief valve 20 are coupled in series with the second side 30.

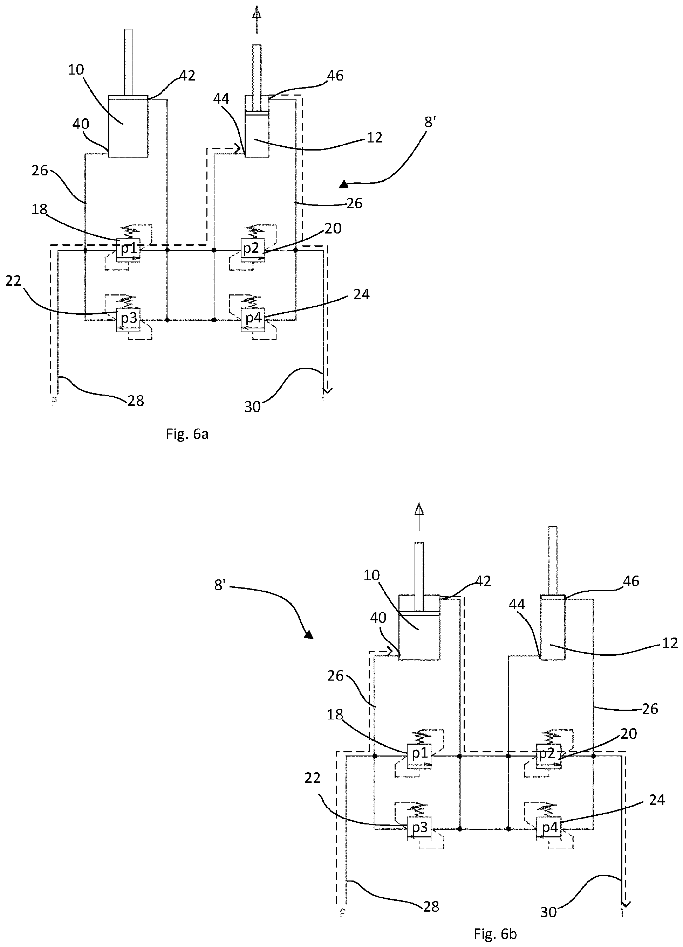

Figure 6a schematically illustrates a hydraulic arrangement 8' wherein the hydraulic arrangement 8' comprises a third and fourth relief pressure valve 22, 24. Wherein the third pressure relief valve 22 have a third relief pressure (p3), and the fourth pressure relief valve 24 have a fourth relief pressure (p4). In one preferred embodiment the third relief pressure (p3) is smaller than the first relief pressure (p1). In the illustrated embodiment the third pressure relief valve 22 is coupled in parallel with the master actuator 10 and the first pressure relief valve 18. In a similar manner, the fourth pressure relief valve 24 is coupled in parallel with the slave actuator 12 and the second pressure relief valve 20. In the illustrated embodiment the third pressure relief valve 22 and the fourth pressure relief valve 24 are designed to open in a direction from the second side 30 to the first side 28 and wherein the first pressure relief valve 18 and the second pressure relief valve 20 are designed to open in a direction from the first side 28 to the second side 30.

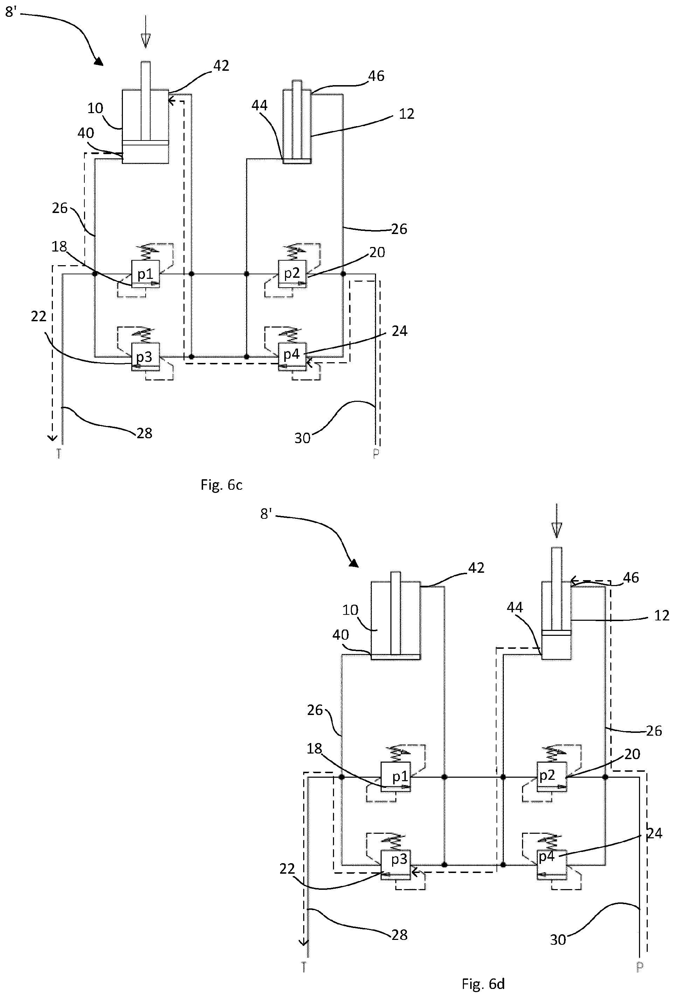

In this proposed hydraulic arrangement 8', the third and fourth pressure relief valve 22, 24 enable for the gripping components 2, 4 to be synchronized in both the open position 36 and the closed position 36. In figure 6a and 6b it will be shown how the hydraulic fluid moves in a scenario in which the master and slave actuator 10, 12 are extended and out of synchronization. Wherein figure 6a show the slave actuator 12 out of synchronization and 6b show the master actuator 10 out of synchronization. In figure 6c and 6d it will be shown how the hydraulic fluid moves in a scenario in which the master and slave actuator 10, 12 are retracted and out of synchronization. Wherein figure 6c show the master actuator 10 out of synchronization and 6d the slave actuator 12 out of synchronization.

In figure 6a, the illustrated embodiment depicts a scenario in which the master actuator 10 and the slave actuator 12 are in an extended state in the closed position 38 and the slave actuator 12 is out of synchronization with the master actuator 10. The dashed line with arrow indicate the conduit in which the hydraulic fluid moves to synchronize the actuators 10, 12. Following the dashed line it can be seen that the hydraulic fluid flows from the first side 28, which is in this case the pump side, via the first pressure relief valve, which is in this case open since no more hydraulic fluid can be pumped into the master actuator 10 via the first master port 40 as the master actuator is fully extended. The hydraulic fluid then moves towards the first slave port 44 for extending the slave actuator 12, which is illustrated by an arrow just above the piston on the slave actuator 12. Finally, the hydraulic fluid moves towards the second slave port 46 to the second side 30, which is connected to the hydraulic fluid tank.

Figure 6b shows the same hydraulic arrangement 8' as illustrated in figure 6a but shows instead how the hydraulic fluid moves in a scenario in which the master actuator 10 is out of synchronization with the slave actuator 12. Following the dashed line it can be seen that the hydraulic fluid flows from the first side 28 via the first master port 40 into the master actuator 10 and from the second master port 42 to the second pressure relief valve 20. The second pressure relief valve 20 is in this case open since no more hydraulic fluid can be pumped into the slave actuator 12 via the first slave port 44 as the slave actuator 12 is fully extended. The fluid then moves from the second pressure relief valve 20 to the second side 30, which is connected to the hydraulic fluid tank.

Figure 6c and 6d shows the same hydraulic arrangement 8' as in figure 6a and 6b but shows a scenario in master and slave actuators 10, 12 are retracted.

Figure 6c schematically illustrates a hydraulic arrangement 8' wherein the hydraulic arrangement 8' comprises a third and fourth relief pressure valve 22, 24 and wherein the master actuator 10 and the slave actuator 12 are in an retracted state in the open position 36 and wherein the master actuator 10 is out of synchronization with the slave actuator 12 in the open position 36. Following the dashed line it can be seen that the hydraulic fluid flows from the second side 30, which is in this case the pump side, via the fourth pressure relief valve 24, which is in this case upon since no more hydraulic fluid can be pumped into the slave actuator 12 via the second slave port 46 as the slave actuator 12 is retracted. The fluid then moves towards the second master port 42 for retracting the master actuator 10 and then from the first master port 40 to the first side 28, which is connected to the hydraulic fluid tank.

Figure 6d schematically illustrates the same hydraulic arrangement 8' as shown in figure 6c but shows a scenario in which the slave actuator 10 is out of synchronization with the master actuator 10 in the open position 36. Following the dashed line it can be seen that a hydraulic fluid flows from the second side 30, which in this case is the pump side, to the second slave port 46 for retracting the slave actuator 12. The hydraulic fluid then moves from the first slave port 44 via the third pressure relief valve 22, which in this is case open since no more hydraulic fluid can be pumped into the master actuator 10 via the second master port 42 as the master actuator is fully retracted, to the first side 28, which is connected to the hydraulic fluid tank.

In one preferred embodiment, as shown in figure 6a, 6b, 6c and 6d, the master actuator 10, the first pressure relief valve 18 and the third pressure relief valve 22 are coupled in series with the first side 28. While the slave actuator 12, the second pressure relief valve 20 and the fourth pressure relief valve 24 are coupled in series with the second side 30.

It will be understood that the invention is not restricted to the described and illustrated exemplifying embodiments thereof and that modifications can be made within the scope of the invention as defined by the accompanying claims. Furthermore, it will be understood that the described aspects of the present invention may be combined or be independent from each other.

## Claims

1. A work implement (1) for a machine designed to grip material or an object, the work implement (1) comprising a frame (6), a first gripper component (2) and a second gripper component (4), a master actuator (10) having a first master port (40) on a piston side and a second master port (42) on a rod side and a slave actuator (12) having a first slave port (44) on a piston side and a second slave port (46) on a rod side and a hydraulic arrangement (8, 8'), the first gripper component (2) being coupled to the frame (6) in a pivotable manner, the second gripper component (4) being coupled to the frame (6) in a pivotable manner, the master actuator (10) being coupled to the frame (6) and the first gripper component (2) for pivoting the first gripper component (2) from an open position (36) to a closed position (38) and back, the slave actuator (12) being coupled to the frame (6) and the second gripper component (4) for pivoting the second gripper component (4) from an open position (36) to a closed position (38) and back, the hydraulic arrangement (8, 8') comprising a first side (28), a second side (30) and hydraulic conduits (26) for interconnecting the first side (28) to the first master port (40) and the second master port (42), the first slave port (44) and the second slave port (46) and the second side (30), wherein the hydraulic arrangement (8, 8') further comprises a first pressure relief valve (18) having a first relief pressure (p1) and a second pressure relief valve (20) having a second relief pressure (p2), wherein the master actuator (10) and the first pressure relief valve (18) are coupled in parallel, the slave actuator (12) and the second pressure relief valve (20) are coupled in parallel and wherein the master actuator (10) and the first pressure relief valve (18) are coupled in series with the slave actuator (12) and the second pressure relief valve (20), wherein the first pressure relief valve (18) and the second pressure relief valve (20) are arranged to open up in a same direction either from the first side (28) to the second side (30) or from the second side (30) to the first side (28).

2. The work implement (1) according to claim 1, wherein the first pressure relief valve (18) and the second pressure relief valve (20) are arranged to open in a direction from the first side (28) to the second side (30) upon reaching the first pressure (p1) or the second pressure (p2) so that the first gripper component (2) or the second gripper component (4) can be moved into synchronization in a closed position (38).

3. The work implement (1) according to claim 1, wherein the first pressure relief valve (18) and the second pressure relief valve (20) are arranged to open in a direction from the second side (30) to the first side (28) upon reaching the second pressure (p2) or the first pressure (p1) so that the first gripper component (2) or the second gripper component (4) can be moved into synchronization in an open position (36).

4. The work implement (1) according to any of claims 1 to 3, wherein the first side (28) is connectable to a hydraulic fluid tank or a hydraulic fluid pump and wherein the second side (30) is connectable to the hydraulic fluid pump if the first side (28) is connected to the hydraulic fluid tank or to the hydraulic fluid tank if the first side (28) is connected to the hydraulic fluid pump.

5. The work implement (1) according to any of claims 1 to 4, wherein the master actuator (10) and the first pressure relief valve (18) are coupled in series with the first side (28) and the slave actuator (12) and the second pressure relief valve (20) are coupled in series with the second side (30).

6. The work implement (1) according to any of claims 1 to 5, wherein the master actuator (10) and the slave actuator (12) are in an extended state in the closed position (38) and wherein, if the slave actuator (12) is out of synchronization with the master actuator (10) in the closed position (38), a hydraulic fluid flows from the first side (28), which is in this case the pump side, via the first pressure relief valve (18), which is in this case upon since no more hydraulic fluid can be pumped into the master actuator (10) via the first master port (40) as the master actuator (10) is extended, to the first slave port (44) for extending the slave actuator (12) and then from the second slave port (46) to the second side (30), which is connected to the hydraulic fluid tank.

7. The work implement (1) according to any of claims 1 to 5, wherein the master actuator (10) and the slave actuator (12) are in an extended state in the closed position (38) and wherein, if the master actuator (10) is out of synchronization with the slave cylinder (12) in the closed position (38), a hydraulic fluid flows from the first side (28) via the first master port (40) into the master actuator (10) and from the second master port (42) to the second pressure relief valve (20), which is in this case open since no more hydraulic fluid can be pumped into the slave actuator (12) via the first slave port (44) as the slave actuator (12) is extended, and from the second pressure relief valve (20) to the second side (30), which is connected to the hydraulic fluid tank.

8. The work implement (1) according to any of the previous claims, wherein the first relief pressure (p1) is smaller than the second relief pressure (p2).

9. The work implement (1) according to any of the previous claim, wherein the hydraulic arrangement (8, 8') further comprising a third pressure relief valve (22) having a third relief pressure (p3), and a fourth pressure relief valve (24) having a fourth relief pressure (p4), the third pressure relief valve (22) being coupled in parallel with the master actuator (10) and the first pressure relief valve (18) and the fourth pressure relief valve (24) being coupled in parallel with the slave actuator (12) and the second pressure relief valve (20) and wherein the third pressure relief valve (22) and the fourth pressure relief valve (24) are designed to open in a direction from the second side (30) to the first side (28) and wherein the first pressure relief valve (18) and the second pressure relief valve (20) are designed to open in a direction from the first side (28) to the second side (30).

10. The work implement (1) according to claim 9, wherein the master actuator (1), the first pressure relief valve (18) and the third pressure relief valve (22) are coupled in series with the first side (28) and wherein the slave actuator (12), the second pressure relief valve (20) and the fourth pressure relief valve (24) are coupled in series with the second side (30).

11. The work implement (1) according to claims 9 or 10, wherein the master actuator (10) and the slave actuator (12) are in an retracted state in the open position (36) and wherein, if the master actuator (10) is out of synchronization with the slave actuator (12) in the open position (36), a hydraulic fluid flows from the second side (30), which is in this case the pump side, via the fourth pressure relief valve (24), which is in this case upon since no more hydraulic fluid can be pumped into the slave actuator (12) via the second slave port (46) as the slave actuator (12) is retracted, to the second master port (42) for retracting the master actuator (10) and then from the first master port (40) to the first side (28), which is connected to the hydraulic fluid tank.

12. The work implement (1) according to claims 9 to 10, wherein the master actuator (10) and the slave actuator (12) are in an retracted state in the open position (36) and wherein, if the slave actuator (12) is out of synchronization with the master actuator (10) in the open position (36), a hydraulic fluid flows from the second side (30), which is in this case the pump side, to the second slave port (46) for retracting the slave actuator (12) and then from the first slave port (44) via the third pressure relief valve (22), which is in this case open since no more hydraulic fluid can be pumped into the master actuator (10) via the second master port (42) as the master actuator (10) is retracted, to the first side (28), which is connected to the hydraulic fluid tank.

13. The work implement (1) according to any of claims 9 to 12, wherein the third relief pressure (p3) is smaller than the first relief pressure (p1) and wherein the third relief pressure (p3) is smaller than the second relief pressure (p2).

14. The work implement (1) according to any of the previous claims, wherein the first gripper component (2) is a first gripper arm (2) and wherein the second gripper component (4) is a second gripper arm (4).

15. The work implement (1) according to any of the previous claims 1 to 14, wherein any of the first pressure relief valve (18), the second pressure relief valve (20), the third pressure relief valve (22) or the fourth pressure relief valve (24) are unidirectional or of the non-return type.

16. A quick coupling unit or a tilt rotator comprising a work implement (1) according to any of the previous claims 1 to 15.

## Patentansprüche

1. Arbeitsgerät (1) für eine Maschine, das ausgelegt ist, um Material oder ein Objekt zu greifen, das Arbeitsgerät (1) umfassend einen Rahmen (6), eine erste Greiferkomponente (2) und eine zweite Greiferkomponente (4), einen Master-Aktor (10), aufweisend einen ersten Master-Anschluss (40) auf einer Kolbenseite und einen zweiten Master-Anschluss (42) auf einer Stangenseite, und einen Slave-Aktor (12), aufweisend einen ersten Slave-Anschluss (44) auf einer Kolbenseite und einen zweiten Slave-Anschluss (46) auf einer Stangenseite, und eine Hydraulikanordnung (8, 8'), wobei die erste Greiferkomponente (2) auf schwenkbare Weise mit dem Rahmen (6) gekoppelt ist, die zweite Greiferkomponente (4) auf schwenkbare Weise mit dem Rahmen (6) gekoppelt ist, der Master-Aktor (10) zum Schwenken der ersten Greiferkomponente (2) von einer offenen Position (36) in eine geschlossene Position (38) und zurück mit dem Rahmen (6) und der ersten Greiferkomponente (2) gekoppelt ist und der Slave-Aktor (12) zum Schwenken der zweiten Greiferkomponente (4) von einer offenen Position (36) in eine geschlossene Position (38) und zurück mit dem Rahmen (6) und der zweiten Greiferkomponente (4) gekoppelt ist, die Hydraulikanordnung (8, 8') umfassend eine erste Seite (28), eine zweite Seite (30) und Hydraulikleitungen (26) zum gegenseitigen Verbinden der ersten Seite (28) mit dem ersten Master-Anschluss (40) und dem zweiten Master-Anschluss (42), dem ersten Slave-Anschluss (44) und dem zweiten Slave-Anschluss (46) und der zweiten Seite (30), wobei die Hydraulikanordnung (8, 8') ferner ein erstes Druckentlastungsventil (18), aufweisend einen ersten Entlastungsdruck (p1), und ein zweites Druckentlastungsventil (20), aufweisend einen zweiten Entlastungsdruck (p2), umfasst, wobei
der Master-Aktor (10) und das erste Druckentlastungsventil (18) parallel gekoppelt sind, der Slave-Aktor (12) und das zweite Druckentlastungsventil (20) parallel gekoppelt sind und wobei
der Master-Aktor (10) und das erste Druckentlastungsventil (18) in Reihe mit dem Slave-Aktor (12) und dem zweiten Druckentlastungsventil (20) gekoppelt sind, wobei das erste Druckentlastungsventil (18) und das zweite Druckentlastungsventil (20) angeordnet sind, um sich in eine gleiche Richtung entweder von der ersten Seite (28) zu der zweiten Seite (30) oder von der zweiten Seite (30) zu der ersten Seite (28) zu öffnen.

2. Arbeitsgerät (1) nach Anspruch 1, wobei das erste Druckentlastungsventil (18) und das zweite Druckentlastungsventil (20) angeordnet sind, um sich beim Erreichen des ersten Drucks (p1) oder des zweiten Drucks (p2) in eine Richtung von der ersten Seite (28) zu der zweiten Seite (30) zu öffnen, so dass die erste Greiferkomponente (2) oder die zweite Greiferkomponente (4) in einer geschlossenen Position (38) in eine Synchronisation bewegt werden kann.

3. Arbeitsgerät (1) nach Anspruch 1, wobei das erste Druckentlastungsventil (18) und das zweite Druckentlastungsventil (20) angeordnet sind, um sich beim Erreichen des zweiten Drucks (p2) oder des ersten Drucks (p1) in eine Richtung von der zweiten Seite (30) zu der ersten Seite (28) zu öffnen, so dass die erste Greiferkomponente (2) oder die zweite Greiferkomponente (4) in einer offenen Position (36) in eine Synchronisation bewegt werden kann.

4. Arbeitsgerät (1) nach einem der Ansprüche 1 bis 3, wobei die erste Seite (28) mit einem Hydraulikfluidbehälter oder einer Hydraulikfluidpumpe verbindbar ist und wobei die zweite Seite (30) mit der Hydraulikfluidpumpe verbindbar ist, wenn die erste Seite (28) mit dem Hydraulikfluidbehälter verbunden ist, oder mit dem Hydraulikfluidbehälter, wenn die erste Seite (28) mit der Hydraulikfluidpumpe verbunden ist.

5. Arbeitsgerät (1) nach einem der Ansprüche 1 bis 4, wobei der Master-Aktor (10) und das erste Druckentlastungsventil (18) in Reihe mit der ersten Seite (28) gekoppelt sind und der Slave-Aktor (12) und das zweite Druckentlastungsventil (20) in Reihe mit der zweiten Seite (30) gekoppelt sind.

6. Arbeitsgerät (1) nach einem der Ansprüche 1 bis 5, wobei sich der Master-Aktor (10) und der Slave-Aktor (12) in einem ausgefahrenen Zustand in der geschlossenen Position (38) befinden und wobei, wenn der Slave-Aktor (12) außer Synchronisation mit dem Master-Aktor (10) in der geschlossenen Position (38) ist, ein Hydraulikfluid von der ersten Seite (28), die in diesem Fall die Pumpenseite ist, über das erste Druckentlastungsventil (18), das in diesem Fall geöffnet ist, da kein weiteres Hydraulikfluid über den ersten Master-Anschluss (40) in den Master-Aktor (10) gepumpt werden kann, weil der Master-Aktor (10) ausgefahren ist, zu dem ersten Slave-Anschluss (44) zum Ausfahren des Slave-Aktors (12) und dann von dem zweiten Slave-Anschluss (46) zu der zweiten Seite (30), die mit dem Hydraulikfluidbehälter verbunden ist, fließt.

7. Arbeitsgerät (1) nach einem der Ansprüche 1 bis 5, wobei sich der Master-Aktor (10) und der Slave-Aktor (12) in einem ausgefahrenen Zustand in der geschlossenen Position (38) befinden und wobei, wenn der Master-Aktor (10) außer Synchronisation mit dem Slave-Zylinder (12) in der geschlossenen Position (38) ist, ein Hydraulikfluid von der ersten Seite (28) über den ersten Master-Anschluss (40) in den Master-Aktor (10) und von dem zweiten Master-Anschluss (42) zu dem zweiten Druckentlastungsventil (20), das in diesem Fall geöffnet ist, da kein weiteres Hydraulikfluid über den ersten Slave-Anschluss (44) in den Slave-Aktor (12) gepumpt werden kann, weil der Slave-Aktor (12) ausgefahren ist, und von dem zweiten Druckentlastungsventil (20) zu der zweiten Seite (30), die mit dem Hydraulikfluidbehälter verbunden ist, fließt.

8. Arbeitsgerät (1) nach einem der vorhergehenden Ansprüche, wobei der erste Entlastungsdruck (p1) kleiner als der zweite Entlastungsdruck (p2) ist.

9. Arbeitsgerät (1) nach einem der vorhergehenden Ansprüche, wobei die Hydraulikanordnung (8, 8') ferner ein drittes Druckentlastungsventil (22), aufweisend einen dritten Entlastungsdruck (p3), und ein viertes Druckentlastungsventil (24), aufweisend einen vierten Entlastungsdruck (p4), umfasst, wobei das dritte Druckentlastungsventil (22) parallel mit dem Master-Aktor (10) und dem ersten Druckentlastungsventil (18) gekoppelt ist und das vierte Druckentlastungsventil (24) parallel mit dem Slave-Aktor (12) und dem zweiten Druckentlastungsventil (20) gekoppelt ist und wobei das dritte Druckentlastungsventil (22) und das vierte Druckentlastungsventil (24) ausgelegt sind, um sich in eine Richtung von der zweiten Seite (30) zu der ersten Seite (28) zu öffnen, und wobei das erste Druckentlastungsventil (18) und das zweite Druckentlastungsventil (20) ausgelegt sind, um sich in eine Richtung von der ersten Seite (28) zu der zweiten Seite (30) zu öffnen.

10. Arbeitsgerät (1) nach Anspruch 9, wobei der Master-Aktor (10), das erste Druckentlastungsventil (18) und das dritte Druckentlastungsventil (22) in Reihe mit der ersten Seite (28) gekoppelt sind und wobei der Slave-Aktor (12), das zweite Druckentlastungsventil (20) und das vierte Druckentlastungsventil (24) in Reihe mit der zweiten Seite (30) gekoppelt sind.

11. Arbeitsgerät (1) nach einem der Ansprüche 9 oder 10, wobei sich der Master-Aktor (10) und der Slave-Aktor (12) in einem eingefahrenen Zustand in der offenen Position (36) befinden und wobei, wenn der Master-Aktor (10) außer Synchronisation mit dem Slave-Aktor (12) in der offenen Position (36) ist, ein Hydraulikfluid von der zweiten Seite (30), die in diesem Fall die Pumpenseite ist, über das vierte Druckentlastungsventil (24), das in diesem Fall geöffnet ist, da kein weiteres Hydraulikfluid über den zweiten Slave-Anschluss (46) in den Slave-Aktor (12) gepumpt werden kann, weil der Slave-Aktor (12) eingefahren ist, zu dem zweiten Master-Anschluss (42) zum Einfahren des Master-Aktors (10) und dann von dem ersten Master-Anschluss (40) zu der ersten Seite (28), die mit dem Hydraulikfluidbehälter verbunden ist, fließt.

12. Arbeitsgerät (1) nach einem der Ansprüche 9 bis 10, wobei sich der Master-Aktor (10) und der Slave-Aktor (12) in einem eingefahrenen Zustand in der offenen Position (36) befinden und wobei, wenn der Slave-Aktor (12) außer Synchronisation mit dem Master-Aktor (10) in der offenen Position (36) ist, ein Hydraulikfluid von der zweiten Seite (30), die in diesem Fall die Pumpenseite ist, zu dem zweiten Slave-Anschluss (46) zum Einfahren des Slave-Aktors (12) und dann von dem ersten Slave-Anschluss (44) über das dritte Druckentlastungsventil (22), das in diesem Fall offen ist, da kein weiteres Hydraulikfluid über den zweiten Master-Anschluss (42) in den Master-Aktor (10) gepumpt werden kann, weil der Master-Aktor (10) eingefahren ist, zu der ersten Seite (28), die mit dem Hydraulikfluidbehälter verbunden ist, fließt.

13. Arbeitsgerät (1) nach einem der Ansprüche 9 bis 12, wobei der dritte Entlastungsdruck (p3) kleiner als der erste Entlastungsdruck (p1) ist und wobei der dritte Entlastungsdruck (p3) kleiner als der zweite Entlastungsdruck (p2) ist.

14. Arbeitsgerät (1) nach einem der vorhergehenden Ansprüche, wobei die erste Greiferkomponente (2) ein erster Greiferarm (2) ist und wobei die zweite Greiferkomponente (4) ein zweiter Greiferarm (4) ist.

15. Arbeitsgerät (1) nach einem der vorhergehenden Ansprüche 1 bis 14, wobei ein beliebiges der folgenden Druckentlastungsventile: des ersten Druckentlastungsventils (18), des zweiten Druckentlastungsventils (20), des dritten Druckentlastungsventils (22) oder des vierten Druckentlastungsventils (24) unidirektional oder von der Art eines Rückschlagventils ist.

16. Schnellkopplungseinheit oder Kipprotator, umfassend ein Arbeitsgerät (1) nach einem der vorhergehenden Ansprüche 1 bis 15.

## Revendications

1. Instrument de travail (1) pour une machine conçue pour saisir un matériau ou un objet, l'instrument de travail (1) comprenant un châssis (6), un premier composant de pince (2) et un second composant de pince (4), un actionneur maître (10) ayant un premier orifice maître (40) sur un côté piston et un second orifice maître (42) sur un côté tige et un actionneur esclave (12) ayant un premier orifice esclave (44) sur un côté piston et un second orifice esclave (46) sur un côté tige, ainsi qu'un agencement hydraulique (8, 8'), le premier composant de pince (2) étant accouplé au châssis (6) de manière à pivoter, le second composant de pince (4) étant accouplé au châssis (6) de manière à pivoter, l'actionneur maître (10) étant couplé au châssis (6) et au premier composant de pince (2) pour faire pivoter le premier composant de pince (2) d'une position ouverte (36) à une position fermée (38) et retour, l'actionneur esclave (12) étant couplé au châssis (6) et au second composant de pince (4) pour faire pivoter le second composant de pince (4) d'une position ouverte (36) à une position fermée (38) et retour, l'agencement hydraulique (8, 8') comprenant un premier côté (28), un second côté (30) et des conduits hydrauliques (26) pour interconnecter le premier côté (28) au premier orifice maître (40) et au second orifice maître (42), au premier orifice esclave (44) et au second orifice esclave (46) et au second côté (30), dans lequel l'agencement hydraulique (8, 8') comprend en outre une première soupape de décharge de pression (18) ayant une première pression de décharge (p1) et une deuxième soupape de décharge de pression (20) ayant une deuxième pression de décharge (p2),
dans lequel
l'actionneur maître (10) et la première soupape de décharge de pression (18) sont couplés en parallèle, l'actionneur esclave (12) et la deuxième soupape de décharge de pression (20) sont couplés en parallèle et dans lequel
l'actionneur maître (10) et la première soupape de décharge de pression (18) sont couplés en série avec l'actionneur esclave (12) et la deuxième soupape de décharge de pression (20), dans lesquel la première soupape de décharge de pression (18) et la deuxième soupape de décharge de pression (20) sont agencées pour s'ouvrir dans une même direction, soit du premier côté (28) vers le second côté (30), soit du second côté (30) vers le premier côté (28).

2. Instrument de travail (1) selon la revendication 1, dans lequel la première soupape de décharge de pression (18) et la deuxième soupape de décharge de pression (20) sont agencées pour s'ouvrir dans une direction du premier côté (28) vers le second côté (30) lorsqu'elles atteignent la première pression (p1) ou la deuxième pression (p2), de sorte que le premier composant de pince (2) ou le second composant de pince (4) peut être déplacé de manière à rétablir la synchronisation en position fermée (38).

3. Instrument de travail (1) selon la revendication 1, dans lequel la première soupape de décharge de pression (18) et la deuxième soupape de décharge de pression (20) sont agencées pour s'ouvrir dans une direction du second côté (30) vers le premier côté (28) lorsqu'elles atteignent la deuxième pression (p2) ou la première pression (p1), de sorte que le premier composant de pince (2) ou le second composant de pince (4) peut être déplacé de manière à rétablir la synchronisation en position ouverte (36).

4. Instrument de travail (1) selon l'une quelconque des revendications 1 à 3, dans lequel le premier côté (28) peut être raccordé à un réservoir de fluide hydraulique ou à une pompe à fluide hydraulique et dans lequel le second côté (30) peut être raccordé à la pompe à fluide hydraulique si le premier côté (28) est raccordé au réservoir de fluide hydraulique ou au réservoir de fluide hydraulique si le premier côté (28) est raccordé à la pompe à fluide hydraulique.

5. Instrument de travail (1) selon l'une quelconque des revendications 1 à 4, dans lequel l'actionneur maître (10) et la première soupape de décharge de pression (18) sont couplés en série avec le premier côté (28) et l'actionneur esclave (12) et la deuxième soupape de décharge de pression (20) sont couplés en série avec le second côté (30).

6. Instrument de travail (1) selon l'une quelconque des revendications 1 à 5, dans lequel l'actionneur maître (10) et l'actionneur esclave (12) sont dans un état étendu dans la position fermée (38) et dans lequel, si l'actionneur esclave (12) est désynchronisé avec l'actionneur maître (10) dans la position fermée (38), un fluide hydraulique s'écoule du premier côté (28), qui est dans ce cas le côté pompe, par l'intermédiaire de la première soupape de décharge de pression (18), qui est dans ce cas ouverte puisque plus aucun fluide hydraulique ne peut être pompé dans l'actionneur maître (10) par l'intermédiaire du premier orifice maître (40) lorsque l'actionneur maître (10) est étendu, vers le premier orifice esclave (44) pour étendre l'actionneur esclave (12), puis du second orifice esclave (46) vers le second côté (30), qui est raccordé au réservoir de fluide hydraulique.

7. Instrument de travail (1) selon l'une quelconque des revendications 1 à 5, dans lequel l'actionneur maître (10) et l'actionneur esclave (12) sont dans un état étendu dans la position fermée (38) et dans lequel, si l'actionneur maître (10) est désynchronisé avec le cylindre esclave (12) dans la position fermée (38), un fluide hydraulique s'écoule du premier côté (28) par l'intermédiaire du premier orifice maître (40) dans l'actionneur maître (10) et du second orifice maître (42) vers la deuxième soupape de décharge de pression (20), qui est dans ce cas ouverte puisque plus aucun fluide hydraulique ne peut être pompé dans l'actionneur esclave (12) par l'intermédiaire du premier orifice esclave (44) lorsque l'actionneur esclave (12) est étendu, puis de la deuxième soupape de décharge de pression (20) vers le second côté (30), qui est raccordé au réservoir de fluide hydraulique.

8. Instrument de travail (1) selon l'une quelconque des revendications précédentes, dans lequel la première pression de décharge (p1) est inférieure à la deuxième pression de décharge (p2).

9. Instrument de travail (1) selon l'une quelconque des revendications précédentes, dans lequel l'agencement hydraulique (8, 8') comprend en outre une troisième soupape de décharge de pression (22) ayant une troisième pression de décharge (p3), et une quatrième soupape de décharge de pression (24) ayant une quatrième pression de décharge (p4), la troisième soupape de décharge de pression (22) étant couplée en parallèle avec l'actionneur maître (10) et la première soupape de décharge de pression (18), et la quatrième soupape de décharge de pression (24) étant couplée en parallèle avec l'actionneur esclave (12) et la deuxième soupape de décharge de pression (20), et dans lequel la troisième soupape de décharge de pression (22) et la quatrième soupape de décharge de pression (24) sont conçues pour s'ouvrir dans une direction du second côté (30) vers le premier côté (28), et dans lequel la première soupape de décharge de pression (18) et la deuxième soupape de décharge de pression (20) sont conçues pour s'ouvrir dans une direction du premier côté (28) vers le second côté (30).

10. Instrument de travail (1) selon la revendication 9, dans lequel l'actionneur maître (10), la première soupape de décharge de pression (18) et la troisième soupape de décharge de pression (22) sont couplés en série avec le premier côté (28) et dans lequel l'actionneur esclave (12), la deuxième soupape de décharge de pression (20) et la quatrième soupape de décharge de pression (24) sont couplés en série avec le second côté (30).

11. Instrument de travail (1) selon les revendications 9 ou 10, dans lequel l'actionneur maître (10) et l'actionneur esclave (12) sont dans un état rétracté dans la position ouverte (36) et dans lequel, si l'actionneur maître (10) est désynchronisé avec l'actionneur esclave (12) dans la position ouverte (36), un fluide hydraulique s'écoule du second côté (30), qui est dans ce cas le côté pompe, par l'intermédiaire de la quatrième soupape de décharge de pression (24), qui est dans ce cas ouverte puisque plus aucun fluide hydraulique ne peut être pompé dans l'actionneur esclave (12) par l'intermédiaire du second orifice esclave (46) lorsque l'actionneur esclave (12) est rétracté, vers le second orifice maître (42) pour rétracter l'actionneur maître (10), puis du premier orifice maître (40) vers le premier côté (28), qui est raccordé au réservoir de fluide hydraulique.

12. Instrument de travail (1) selon les revendications 9 à 10, dans lequel l'actionneur maître (10) et l'actionneur esclave (12) sont dans un état rétracté dans la position ouverte (36) et dans lequel, si l'actionneur esclave (12) est désynchronisé avec l'actionneur maître (10) dans la position ouverte (36), un fluide hydraulique s'écoule du second côté (30), qui est dans ce cas le côté pompe, vers le second orifice esclave (46) pour rétracter l'actionneur esclave (12) puis du premier orifice esclave (44) par l'intermédiaire de la troisième soupape de décharge de pression (22), qui est dans ce cas ouverte puisque plus aucun fluide hydraulique ne peut être pompé dans l'actionneur maître (10) par l'intermédiaire du second orifice maître (42) lorsque l'actionneur maître (10) est rétracté, vers le premier côté (28), qui est raccordé au réservoir de fluide hydraulique.

13. Instrument de travail (1) selon l'une quelconque des revendications 9 à 12, dans lequel la troisième pression de décharge (p3) est inférieure à la première pression de décharge (p1) et dans lequel la troisième pression de décharge (p3) est inférieure à la deuxième pression de décharge (p2).

14. Instrument de travail (1) selon l'une quelconque des revendications précédentes, dans lequel le premier composant de pince (2) est un premier bras de pince (2) et dans lequel le second composant de pince (4) est un second bras de pince (4).

15. Instrument de travail (1) selon l'une quelconque des revendications précédentes 1 à 14, dans lequel l'une quelconque de la première soupape de décharge de pression (18), de la deuxième soupape de décharge de pression (20), de la troisième soupape de décharge de pression (22) ou de la quatrième soupape de décharge de pression (24) est unidirectionnelle ou de type anti-retour.

16. Dispositif de couplage rapide ou rotateur d'inclinaison comprenant un instrument de travail (1) selon l'une quelconque des revendications précédentes 1 à 15.
